# EUROPEAN PATENT APPLICATION

(11) **EP 3 054 747 A1**
(43) Date of publication of application: **10.08.2016**
(21) Application number: 15202639.9
(22) Date of filing: 23.12.2015
(51) Int. Cl.: H05H 1/24, F03D 7/02

(54) **AIRFLOW GENERATION DEVICE**

(30) Priority: 05.02.2015 JP 2015021394
(71) Applicant: Kabushiki Kaisha Toshiba, Tokyo 105-8001 (JP)
(72) Inventor: Onishi, Yuta, Tokyo, 105-8001 (JP); Tanaka, Motofumi, Tokyo, 105-8001 (JP); Asayama, Masahiro, Tokyo, 105-8001 (JP); Shimura, Naohiko, Tokyo, 105-8001 (JP); Yasui, Hiroyuki, Tokyo, 105-8001 (JP); Yamazaki, Kenichi, Tokyo, 105-8001 (JP); Osako, Toshiki, Tokyo, 105-8001 (JP)
(74) Representative: Henkel, Breuer & Partner

(57) **Abstract**

An airflow generation device of an embodiment includes a dielectric base, a first electrode, a second electrode, a third electrode, and a power supply. The dielectric base has a main surface. The first electrode is disposed on the main surface. The second electrode is disposed in the dielectric base with an interval from the first electrode in a first direction along the main surface. At least a part of the third electrode is disposed at a position in the dielectric base, between the first electrode and the second electrode in the first direction, and deeper than the second electrode. The power supply applies voltages for causing discharge to the first, second, and third electrodes.

## Description

### FIELD

Embodiments described herein relate generally to an airflow generation device.

### BACKGROUND

Regarding a fluid apparatus such as a wind turbine in a fluid apparatus system such as a wind power generation system, importance for reducing motive power is increasing from a point of view of energy saving. Further, in such a fluid apparatus, it is very important to suppress vibration and noise from a point of view of securement of safety and improvement of working environment.

Accordingly, in recent years, there has been devised an airflow generation device in which a plate-shaped surface part which receives wind is formed of a dielectric, a first electrode and a second electrode are arranged by being separated from each other along a surface of the dielectric, and an airflow is generated on the surface of the dielectric because of an action of plasma generated between the mutual electrodes, to thereby realize saving of energy and suppression of vibration and noise.

In the conventional airflow generation device, when the distance between the first electrode and the second electrode is increased, an electric field between the electrodes is weakened, and a region of electric field exceeding a dielectric breakdown electric field in air is only in the vicinity of an end on the second electrode side of the first electrode.

In accordance with this, a high electric field region in space which starts discharge, strongly depends on a shape of the end on the second electrode side of the first electrode, and there is a case where, if there is a very small projection on the end, for example, strong discharge locally occurs on the place of the projection, resulting in that only the place is intensively deteriorated, and durability is lowered.

Further, it is a prerequisite that a wind turbine or the like is used in the field, and if an insulation distance between the first electrode and the second electrode becomes short due to a collision of a flying object against a surface of a blade of the wind turbine, there is a possibility that a dielectric breakdown occurs to lower durability of the electrode.

### BRIEF DESCRIPTION OF THE DRAWINGS

FIG. 1 is a view illustrating a cross section of an airflow generation device of a first embodiment.
FIG. 2 is a perspective view when seen from above, illustrating a state of discharge in a configuration of electrodes in FIG. 1.
FIG. 3 is a view of configuration of an airflow generation device of an embodiment in electrostatic field analysis.
FIG. 4 is a view of configuration of an airflow generation device of a comparative example in the electrostatic field analysis.
FIG. 5 is a view illustrating analysis result in a horizontal direction of electric field distribution in the vicinity of a first electrode in each of the airflow generation devices.
FIG. 6 is a sectional view of an airflow generation device of a second embodiment.
FIG. 7 is a sectional view of an airflow generation device of a third embodiment.
FIG. 8 is a sectional view of an airflow generation device of a fourth embodiment.
FIG. 9 is a sectional view of an airflow generation device of a fifth embodiment.
FIG. 10 is a sectional view of an airflow generation device of a sixth embodiment.
FIG. is a sectional view of an airflow generation device of a seventh embodiment.
FIG. 12 is a sectional view of an airflow generation device of an eighth embodiment.

### DETAILED DESCRIPTION

An airflow generation device of an embodiment includes a dielectric base, a first electrode, a second electrode, a third electrode, and a power supply. The dielectric base has a main surface. The first electrode is disposed on the main surface. The second electrode is disposed in the dielectric base with an interval from the first electrode in a first direction along the main surface. At least a part of the third electrode is disposed at a position in the dielectric base, between the first electrode and the second electrode in the first direction, and deeper than the second electrode. The power supply applies voltages for causing discharge to the first, second, and third electrodes.

Hereinafter, embodiments will be described in detail with reference to the drawings.

### (First embodiment)

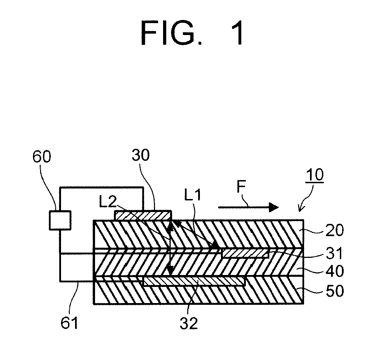

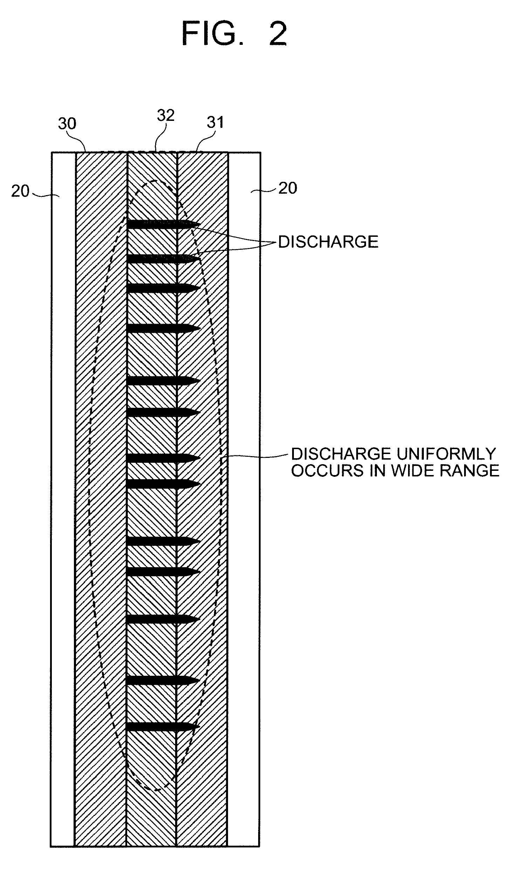

FIG. 1 is a sectional view of an airflow generation device 10 of a first embodiment, and FIG. 2 is a perspective view of FIG. 1 when seen from above. As illustrated in FIG. 1 and FIG. 2, the airflow generation device 10 of the first embodiment has a first dielectric 20, a second electrode 31, a second dielectric 40, a third electrode 32, a base 50 as a third dielectric, and a power supply 60.

The first dielectric 20 is a dielectric base having a main surface exposed to the outside (a front surface or a lateral surface, a first surface). The first electrode 30 is disposed on the main surface of the first dielectric 20.

The second electrode 31 is disposed inside the first dielectric 20 with an interval (gap) provided with respect to the first electrode 30 in a direction in which an airflow F is generated along the main surface (which is referred to as "first direction", hereinafter).

Specifically, the second electrode 31 is disposed on a rear surface of the first dielectric 20 with intervals from the first electrode 30 in the first direction and a direction perpendicular to the main surface (a depth direction or a thickness direction of the dielectric).

The second dielectric 40 is disposed to be brought into contact with the rear surface of the first dielectric 20 by covering the second electrode 31. The base 50 is adhered to a rear surface of the second dielectric 40 so as to cover the third electrode 32 from below.

Specifically, this airflow generation device 10 is designed to have a layer structure in which the second dielectric 40 is stacked on an upper surface of the base 50, the first dielectric 20 is stacked on the second dielectric 40, and the first dielectric 20 and the second dielectric 40 are interposed to prevent direct contact among the first electrode 30, the second electrode 31, and the third electrode 32.

The third electrode 32 is disposed on a surface, which is not brought into contact with the first dielectric 20, of the second dielectric 40 (the rear surface). Specifically, the third electrode 32 is disposed between layers of the base 50 and the second dielectric 40.

The third electrode 32 has a width in a range wider than a region of the gap between the first electrode 30 and the second electrode 31, and is disposed so that a part thereof exists below both of regions of the first electrode 30 and the second electrode 31.

In other words, the third electrode 32 is provided below the second electrode 31 so as to fill the gap between the first electrode 30 and the second electrode 31 when seen from above. Specifically, the third electrode 32 is provided so as to be overlapped with both of the first electrode 30 and the second electrode 31 when seen from above.

In detail, the third electrode 32 is disposed so that a left end of the electrode 32 is positioned on the left side of an end on the second electrode 31 side of the first electrode 30, and a right end of the electrode 32 is positioned on the right side of an end on the first electrode 30 side of the second electrode 31. Note that the left end of the third electrode 32 is preferably positioned on the right side of a left end of the first electrode 30.

The power supply 60 is a discharge power supply which applies voltages for causing discharge to the first electrode 30 and the second electrode 31. The second electrode 31 and the third electrode 32 are connected by a cable 61, and voltages with the same electric potential are applied to the second electrode 31 and the third electrode 32.

Thicknesses of the respective dielectrics, shapes (widths and the like) of the electrodes are set based on a positional relationship which satisfies L1 ≒ L2, in which a distance in a straight line from a lower right end of the first electrode 30 to an upper left end of the second electrode 31 is set to L1, and a distance in a depth direction from a lower surface of the first electrode 30 to the third electrode 32 is set to L2.

Here, the first electrode 30, the second electrode 31, and the third electrode 32 are arranged by interposing the first dielectric 20 between the first electrode 30 and the second electrode 31, and interposing the second dielectric 40 between the second electrode 31 and the third electrode 32, in order to prevent the direct contact among the electrodes.

The distance in the horizontal direction (right-and-left direction in FIG. 1) between the end on the second electrode 31 side of the first electrode 30 and the end on the first electrode 30 side of the second electrode 31 is set in a range in which proper discharge can be occurred between the both electrodes when predetermined applied voltages are applied.

It is only required to dispose the first electrode 30 and the second electrode 31 so that an airflow directing from the first electrode 30 side to the second electrode 31 side can be generated on the surface, which is not adhered to the second dielectric 40, of the first dielectric 20.

Further, on the surface, which is not adhered to the first dielectric 20, of the second dielectric 40, the base 50 of the dielectric is disposed so that the surface is brought into contact with the surface of the base 50. When the third electrode 32 is buried inside the second dielectric 40, there is no need to provide the base 50.

As illustrated in FIG. 1, the first electrode 30 and the second electrode 31, and the first electrode 30 and the third electrode 32, are connected to the power supply 60 via the cable 61. Specifically, the wiring is performed so that electric potential of the second electrode 31 and electric potential of the third electrode 32 become the same.

The power supply 60 functions as a voltage applying unit which applies voltages between the first electrode 30, and the second electrode 31 and the third electrode 32. The first electrode 30 functions as an electrode being a source of generating plasma, and the other electrodes 31 and 32 function as electrodes which specify a direction in which an airflow generated by the plasma generated in the first electrode 30 flows. The voltage applied to the first electrode 30 and the voltage applied to the other electrodes 31 and 32 are different.

The power supply 60 outputs, for example, a pulsed output voltage obtained by intermittently outputting a positive and/or negative voltage, an alternating voltage obtained by alternately outputting a positive and/or negative pulsed voltage, an output voltage having an alternating current (sinusoidal, intermittent sinusoidal) waveform, or the like.

Each of the first dielectric 20, the second dielectric 40, and the base 50 is formed of, for example, a dielectric material such as a resin material or a ceramic material. As the resin material, there can be cited, for example, a resin material selected from the following thermoplastic resin, thermosetting resin, aromatic resin, and the like.

As the resin material to be selected, there can be cited polyvinyl chloride, polystyrene, polysulfone, polyphenylene sulfide, polyphenyleneether, polypropylene, a methacrylic resin, a fluorocarbon resin, polyamide-imide, polyamide, polybutylene terephthalate, polyetherimide, polyetherketone, polyethersulfone, polyethylene, polyethylene terephthalate, polyimide, polyaminobismaleimide, polyketone, a silicone resin, an epoxy resin, a polyester resin, a phenol resin, and the like.

Further, as the ceramic material, there can be cited a ceramic material whose main component is aluminum nitride, alumina, zirconia, hafnia, titania, silica, or the like.

Further, it is also possible to form the first dielectric 20, the second dielectric 40, and the base 50 by using a fine particle-containing resin layer made of a resin material in which a fine particle made of an inorganic material is dispersed to be contained.

The inorganic material dispersed to be contained in the fine particle-containing resin layer is formed of a layered clay compound, for example, and is formed of a material of at least one kind or more selected from a mineral group consisting of a smectite group, a mica group, and a vermiculite group, for example.

For example, as the smectite group, there can be cited monmorillonite, hectorite, saponite, sauconite, beidellite, stevensite, nontronite, and the like. As the mica group, there can be cited chlorite, phlogopite, lepidolite, muscovite, biotite, palagonite, margarite, taeniolite, tetrasilicic mica, and the like. As the vermiculite group, there can be cited trioctahedral vermiculite, dioctahedral vermiculite, and the like.

By forming the first dielectric 20 to be the surface of the airflow generation device 10 which is brought into contact with the discharge with the use of the fine particle-containing resin layer made of the resin material in which the fine particle made of the inorganic material is dispersed to be contained, electrical tree developed from the surface stops by colliding with the fine particle made of the inorganic material.

Accordingly, it is possible to decrease development speed of the electrical tree, to improve an operating life of the dielectric. Further, since the fine particle-containing resin layer is provided, heat conductivity is improved, resulting in that an effect of diffusing heat generated by partial discharge to the periphery to lower a temperature of a place where the partial discharge occurs, can be obtained.

A material of the first electrode 30, the second electrode 31, and the third electrode 32 can be appropriately selected from publicly-known conductive materials, in accordance with an environment under which the airflow generation device 10 is used. As the material of the first electrode 30, the second electrode 31, and the third electrode 32, it is also possible to use, for example, metal such as copper foil, stainless steel, Inconel (trade name), Hastelloy (trade name), titanium, platinum, tungsten, molybdenum, nickel, copper, gold, silver, tin, or chromium, an alloy containing these metallic elements as main components, carbon nanotubes, an inorganic good electric conductor such as conductive ceramics, an organic good electric conductor such as conductive plastic, or the like, in accordance with the environment under which the airflow generation device 10 is used.

When conductive rubber and conductive ink excellent in flexibility, for example, are used for the third electrode 32, it is possible to improve flexibility of the airflow generation device 10. Further, the third electrode 32 can be deformed in any shape, and it is also possible to use the conductive resin material and the metal material in a combined manner. Note that the conductive rubber and the conductive ink can be used also for the first electrode 30 and the second electrode 31.

Next, an operation of the airflow generation device 10 of the first embodiment will be described. When the cable 61 is connected from the power supply 60 to the first electrode 30, the second electrode 31, and the third electrode 32, and voltages are applied so that the second electrode 31 and the third electrode 32 have a certain potential difference with respect to the first electrode 30, discharge occurs in the vicinity of the end on the second electrode 31 side of the first electrode 30. In accordance with the discharge, discharge plasma is generated.

Since the first dielectric 20 is interposed between the first electrode 30 and the second electrode 31, the discharge does not reach arc discharge, resulting in that dielectric barrier discharge which can be stably maintained, occurs. The dielectric barrier discharge is discharge formed along the first dielectric 20.

By this discharge, the airflow F which flows from the first electrode 30 side to the second electrode 31 side is generated on one surface of the first dielectric 20.

### (Effect of first embodiment)

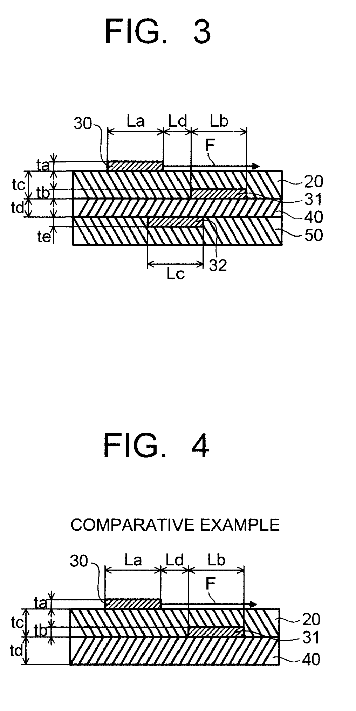

An effect of the airflow generation device 10 of the first embodiment will be described by being compared to an effect of a comparative example. A configuration of the electrodes in the airflow generation device 10 of the first embodiment is illustrated in FIG. 3, and a configuration of electrodes in an airflow generation device having a two-electrode configuration, as the comparative example, is illustrated in FIG. 4. Note that for setting the mutual conditions to be the same, the second electrode 31 is disposed on the surface of the second dielectric 40.

When carrying out electrostatic analysis, the following parameters were defined. As illustrated in FIG. 3 and FIG. 4, each of a length La in an airflow generation direction of the first electrode 30, a length Lb in the airflow generation direction of the second electrode 31, and a length Lc in the airflow generation direction of the third electrode 32, was set to 5 mm.

Each of a thickness ta of the first electrode 30, a thickness tb of the second electrode 31, and a thickness te of the third electrode 32, was set to 0.1 mm.

A thickness tc of the first dielectric 20 was set to 0.5 mm, and a thickness td of the second dielectric 40 was set to 0.3 mm. A distance Ld between the first electrode 30 and the second electrode 31 was set to 2 mm.

Further, it is designed such that each of parameters of the material of the dielectric, the material of the electrode, the applied voltage condition, and the like, is calculated by being set to the same value, in both of the comparative example and the embodiment.

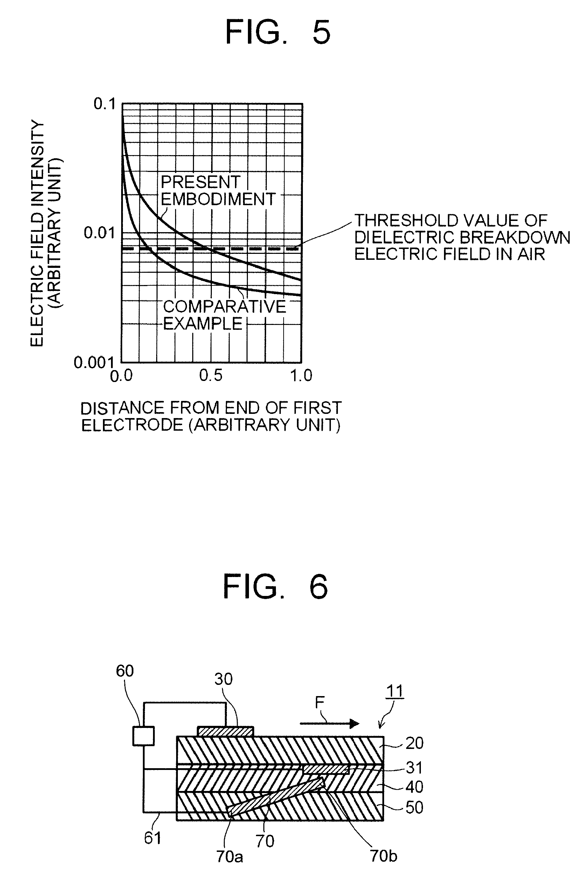

FIG. 5 illustrates a result obtained by determining, based on the electrostatic analysis, a distribution in the horizontal direction of the electric field in the vicinity of the end on the second electrode 31 side of the first electrode 30 (in gas in which the discharge occurs) regarding each of these two airflow generation devices. FIG. 5 is a view illustrating the electric field distribution in the horizontal direction on the front surface of the first dielectric 20 (the electric field distribution with respect to the distance from the end of the first electrode) in FIG. 3 and FIG. 4.

A position of origin on a horizontal axis in the graph of FIG. 5 corresponds to the end on the second electrode 31 side of the first electrode 30. Note that a third electrode is not provided in the airflow generation device of the comparative example, and the third electrode 32 is provided in the airflow generation device of the present embodiment.

From the graph of FIG. 5, electric field intensity in the airflow generation device of the embodiment becomes larger than electric field intensity in the airflow generation device of the comparative example. Specifically, it can be understood that in a three-electrode configuration of the first embodiment, a region of electric field exceeding a dielectric breakdown electric field in air (high electric field region in space which starts discharge) is largely widened from the end of the first electrode 30, when compared to the region in the two-electrode configuration.

Specifically, although the discharge region is narrow and the discharge locally occurs in the airflow generation device of the comparative example, in the airflow generation device of the first embodiment, the electric field intensity is improved to widen the discharge region, so that it is possible to realize stable discharge without changing the applied voltages.

Further, since the third electrode 32 is disposed so as to fill the range corresponding to that from the end on the second electrode 31 side of the first electrode 30 to the end on the first electrode 30 side of the second electrode 31, the discharge generated in the vicinity of the first electrode 30 can be further extended to the second electrode 31 side.

As described above, according to the airflow generation device of the first embodiment, by disposing the third electrode 32 below the range corresponding to the gap between the first electrode 30 and the second electrode 31, it is possible to improve the electric field in the vicinity of the first electrode 30 on the second electrode 31 side, to cause stable discharge in which the occurrence of local discharge is prevented.

Specifically, the electric field between the first electrode 30 and the second electrode 31 becomes strong, and the region of electric field exceeding the dielectric breakdown electric field in the air (high electric field region in the space which starts discharge) on the front surface of the dielectric is not the tip of the first electrode 30, but is widened in a wide range to the entire side portion and the entire surface, resulting in that the occurrence of local discharge can be prevented. Accordingly, it is possible to cause stable discharge without increasing the applied voltages, and to improve the durability of the electrode.

### (Second embodiment)

Next, an airflow generation device 11 of a second embodiment will be described with reference to FIG. 6. FIG. 6 is a sectional view of the airflow generation device 11 of the second embodiment. Note that in the second embodiment, the same part as that of the configuration of the first embodiment will be denoted by the same reference numeral, and overlapped explanation thereof will be omitted or simplified.

As illustrated in FIG. 6, the airflow generation device 11 of the second embodiment has a third electrode 70 disposed in an inclined manner so that its depth continuously decreases from the first electrode 30 side to the second electrode 31 side. Specifically, the second embodiment includes the third electrode 70 which is disposed in a manner different from that of the first embodiment. The third electrode 70 has an end 70a being a first portion on the first electrode 30 side, and an end 70b being a second portion on the second electrode 31 side, and disposed at a position shallower than the end 70a. Hereinafter, the third electrode 70 will be mainly described.

In the airflow generation device 11 of the second embodiment, the end 70a of the third electrode 70, being the end closer to the first electrode 30, is arranged so as to project downward from the surface, which is not adhered to the first dielectric 20, of the second dielectric 40. The portion projected downward from the second dielectric 40 is buried in the base 50 to be covered by the second dielectric 40.

In the second embodiment, when the cable 61 is connected from the power supply 60 to the first electrode 30, the second electrode 31, and the third electrode 70, and voltages are applied so that the second electrode 31 and the third electrode 70 have a certain potential difference with respect to the first electrode 30, discharge occurs in the vicinity of the end on the second electrode 31 side of the first electrode 30. In accordance with the discharge, discharge plasma is generated.

Since the first dielectric 20 is interposed between the first electrode 30 and the second electrode 31, the discharge does not reach arc discharge, resulting in that dielectric barrier discharge which can be stably maintained, occurs. The dielectric barrier discharge is discharge formed along the first dielectric 20.

By this discharge, the airflow F which flows from the first electrode 30 side to the second electrode 31 side is generated on one surface of the first dielectric 20.

As described above, according to the airflow generation device 11 of the second embodiment, since the third electrode 70 is provided below the end on the second electrode 31 side of the first electrode 30, the electric field intensity in the vicinity of the end on the second electrode side of the first electrode 30 is improved, when compared to that in the airflow generation device of the two-electrode configuration (refer to FIG. 4). Consequently, the discharge region is widened, and it is possible to realize the stable discharge in which the occurrence of local discharge is prevented, without changing the applied voltages.

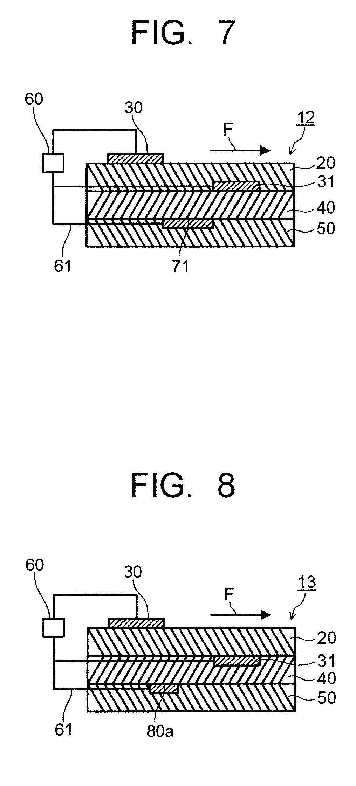

Further, as the configuration of the third electrode 70, the distance in the vertical direction between the end on the second electrode 31 side of the first electrode 30 and the third electrode 70 (distance in the vertical depth direction from the end of the first electrode 30 in FIG. 7) is long, so that it is possible to prevent the deterioration of durability due to the shortened electrical insulation distance caused when the end on the second electrode 31 side of the first electrode 30 is recessed by being collided by a flying object.

### (Third embodiment)

Next, an airflow generation device 12 of a third embodiment will be described with reference to FIG. 7. FIG. 7 is a sectional view of the airflow generation device 12 of the third embodiment. Note that in the third embodiment, the same part as that of the configuration of the first embodiment will be denoted by the same reference numeral, and overlapped explanation thereof will be omitted or simplified.

As illustrated in FIG. 7, in the third embodiment, a third electrode 71 is disposed so that an end of the third electrode 71 is positioned right below the end on the second electrode 31 side of the first electrode 30, and an end of the third electrode 71 is positioned right below the end on the first electrode 30 side of the second electrode 31.

Specifically, this example is an example in which the third electrode 71 having a width which is approximately the same as the gap between the first electrode 30 and the second electrode 31, is disposed right below the gap.

In other words, it can be said that the third electrode 71 has the ends which match the end of the first electrode 30 and the end of the second electrode 31 in the first direction in which the airflow F is generated. The ends of the third electrode 71 have a first end and a second end. The first end matches an end of the first electrode 30 in the first direction. The second end matches an end of the second electrode 31 in the first direction.

Note that the example in which the both ends of the third electrode 71 match the end of the first electrode 30 and the end of the second electrode 31 is described in this example, but, it is also possible that either of the ends matches the end of the first electrode 30 or the end of the second electrode 31.

As described above, according to the airflow generation device 12 of the third embodiment, since the third electrode 71 having the width which is approximately the same as the gap, is disposed right below the gap, the dependency on the shape of the end on the second electrode 31 side is reduced, resulting in that a very small projection on the end does not exert an influence on the discharge, the discharge can be occurred uniformly in a wide range, and a partial deterioration of the electrode can be suppressed. As a result of this, it is possible to improve the durability of the airflow generation device provided to a fluid apparatus used in the field, for example, a blade of a wind turbine or the like.

### (Fourth embodiment)

Next, an airflow generation device 13 of a fourth embodiment will be described with reference to FIG. 8. FIG. 8 is a sectional view of the airflow generation device 13 of the fourth embodiment. Note that in the fourth embodiment, the same part as that of the configuration of the first embodiment will be denoted by the same reference numeral, and overlapped explanation thereof will be omitted or simplified.

As illustrated in FIG. 8, in the airflow generation device 13 of the fourth embodiment, an end of a third electrode 80a, being an end closer to the second electrode 31, is disposed to be positioned on the first electrode 30 side relative to the end on the first electrode 30 side of the second electrode 31. Specifically, the third electrode 80a is disposed so that a part thereof overlaps with the first electrode 30 in the first direction in which the airflow F flows.

In other words, the third electrode 80a is not structured to fill the entire range corresponding to that from the end on the second electrode 31 side of the first electrode 30 to the end on the first electrode 30 side of the second electrode 31, but is configured to provide a gap between the end of the third electrode 80a, being the end closer to the second electrode 31, and the end on the first electrode 30 side of the second electrode 31.

The airflow generation device 13 of the fourth embodiment includes the third electrode 80a having a width in the horizontal direction (width in right-and-left direction in FIG. 8) which is shorter than that of the third electrode in the airflow generation device 10 of the first embodiment. Here, the third electrode 80a will be mainly described.

Specifically, the airflow generation device 13 includes the first dielectric 20 made of a solid, the first electrode 30 provided on one surface of the first dielectric 20, the second electrode 31 provided, on the other surface of the first dielectric 20, to face the first electrode 30 with the gap provided therebetween in the direction in which the airflow F is generated, and the third electrode 80a disposed on the surface, which is not adhered to the first dielectric, of the second dielectric 40, so that a part thereof exists right below the end on the second electrode 31 side of the first electrode 30.

Here, in the airflow generation device 13, the first electrode 30 and the second electrode 31 are arranged so that proper discharge occurs, in a similar manner to the airflow generation device 10 of the first embodiment. Further, the second dielectric 40 is set to have a thickness which improves the electric field in the vicinity of the first electrode 30 at a time of voltage application.

Note that it is also possible that the third electrode 80a is not provided on the surface of the second dielectric 40, but is disposed on the surface of the base 50.

Further, a material which forms the third electrode 80a is the same as the material which forms the third electrode 32 in the airflow generation device 10 of the first embodiment.

Next, an operation of the airflow generation device 13 of the fourth embodiment will be described. When the cable 61 is connected from the power supply 60 to the first electrode 30, the second electrode 31, and the third electrode 80a, and voltages are applied so that the second electrode 31 and the third electrode 80a have a certain potential difference with respect to the first electrode 30, discharge occurs in the vicinity of the end on the second electrode 31 side of the first electrode 30.

In accordance with the discharge, discharge plasma is generated. Since the first dielectric 20 is interposed between the first electrode 30 and the second electrode 31, the discharge does not reach arc discharge, resulting in that dielectric barrier discharge which can be stably maintained, occurs.

The dielectric barrier discharge is discharge formed along the first dielectric 20. By this discharge, the airflow F which flows from the first electrode 30 side to the second electrode 31 side is generated on one surface of the first dielectric 20.

As described above, according to the airflow generation device 13 of the fourth embodiment, since the third electrode 80a is disposed so that a part thereof is positioned right below the end on the second electrode 31 side of the first electrode 30, the electric field intensity in the vicinity of the end on the second electrode 31 side of the first electrode 30 at a time of voltage application is improved, when compared to that in the airflow generation device of the two-electrode configuration. Consequently, the high electric field region in which the discharge occurs is widened, and it is possible to realize the stable discharge in which the occurrence of local discharge is prevented.

Further, the third electrode 80a in this example has the width narrower than that of the third electrode 32 in the first embodiment, and such downsizing of the third electrode 80a leads to reduction in capacity of the airflow generation device, resulting in that reactive power of the discharge power supply 60 can be suppressed.

### (Fifth embodiment)

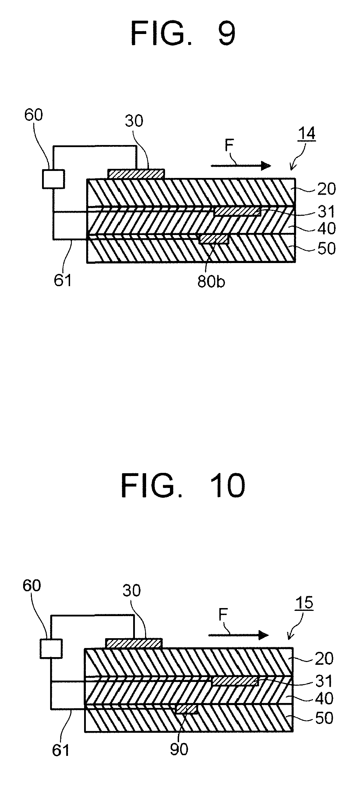

Next, an airflow generation device 14 of a fifth embodiment will be described with reference to FIG. 9. FIG. 9 is a sectional view of the airflow generation device 14 of the fifth embodiment. Note that in the fifth embodiment, the same part as that of the configuration of the fourth embodiment will be denoted by the same reference numeral, and overlapped explanation thereof will be omitted or simplified.

As illustrated in FIG. 9, in the airflow generation device 14 of the fifth embodiment, a third electrode 80b is disposed so that a part thereof is positioned at a position corresponding to that right below the end on the first electrode 30 side of the second electrode 31. Specifically, the third electrode 80b is disposed so that a part thereof overlaps with the second electrode 31 in the first direction in which the airflow F flows. An electrical operation of the fifth embodiment is similar to that of the fourth embodiment.

As described above, according to the airflow generation device 14 of the fifth embodiment, it is possible to obtain the effect similar to that of the fourth embodiment in the electrical aspect. Further, in the physical aspect, since the third electrode does not exist right below the end on the second electrode 31 side of the first electrode 30, even if the end on the second electrode 31 side of the first electrode 30 is recessed by being collided by a flying object, for example, there is no chance that the electrical insulation distance between the electrodes is shortened, resulting in that the durability can be improved.

### (Sixth embodiment)

Next, an airflow generation device 15 of a sixth embodiment will be described with reference to FIG. 10. FIG. 10 is a sectional view of the airflow generation device 15 of the sixth embodiment. Note that in the sixth embodiment, the same part as that of the configuration of the first embodiment will be denoted by the same reference numeral, and overlapped explanation thereof will be omitted or simplified.

As illustrated in FIG. 10, in the airflow generation device 15 of the sixth embodiment, a third electrode 90 is disposed so that it is not overlapped with any of the first electrode 30 and the second electrode 31 in the first direction in which the airflow F flows.

Specifically, the sixth embodiment includes the third electrode 90 which is disposed in a manner different from that of the other embodiments. Hereinafter, the third electrode 90 will be mainly described.

The airflow generation device 15 of the sixth embodiment includes the first dielectric 20 made of a solid, the first electrode 30 provided on one surface of the first dielectric 20, the second electrode 31 provided, on the other surface of the first dielectric 20, to face the first electrode 30 with the gap provided therebetween in a surface direction (direction in which the airflow F is generated), and the third electrode 90 disposed on the surface, which is not adhered to the first dielectric, of the second dielectric 40, so that a whole part thereof exists within a range corresponding to that from the end on the second electrode 31 side of the first electrode 30 to the end on the first electrode 30 side of the second electrode 31.

Here, in the airflow generation device 15, the first electrode 30 and the second electrode 31 are arranged so that proper discharge occurs, in a similar manner to the airflow generation device 10 of the first embodiment. Further, the second dielectric 40 is set to have a thickness which improves the electric field in the vicinity of the first electrode 30 at a time of voltage application.

Next, an operation of the airflow generation device 15 of the sixth embodiment will be described. In the sixth embodiment, the third electrode 90 is provided to be positioned below the range corresponding to that from the end on the second electrode 31 side of the first electrode 30 to the end on the first electrode side of the second electrode.

Accordingly, the electric field intensity in the vicinity of the end on the second electrode side of the first electrode 30 at a time of voltage application is improved, when compared to that in the airflow generation device of the two-electrode configuration as in the comparative example. Consequently, the high electric field region in which the discharge occurs is widened, and it is possible to realize the stable discharge in which the occurrence of local discharge is prevented.

As described above, according to the airflow generation device 15 of the sixth embodiment, it is possible to obtain the effect similar to that of the fourth and fifth embodiments in the electrical aspect. Further, in the physical aspect, since the third electrode does not exist right below the first electrode 30 and the second electrode 31, even if the end on the second electrode 31 side of the first electrode 30 is recessed by being collided by a flying object, for example, there is no chance that the electrical insulation distance between the electrodes is shortened, resulting in that the durability can be improved.

Further, the width of the third electrode 90 is narrower than that of the third electrode 32 in the first embodiment, which leads to reduction in capacity of the airflow generation device, resulting in that reactive power of the discharge power supply 60 can be suppressed.

### (Seventh embodiment)

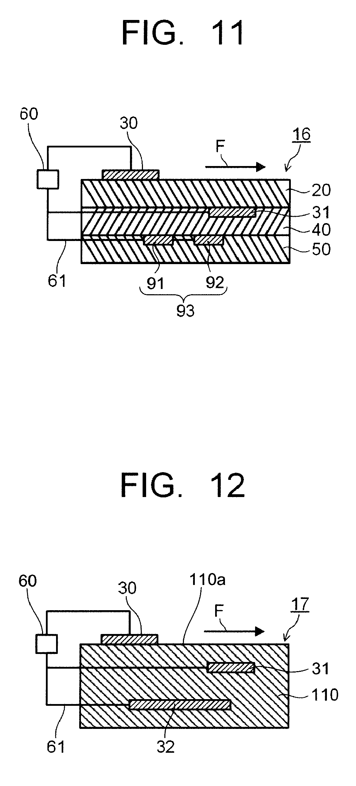

Next, an airflow generation device 16 of a seventh embodiment will be described with reference to FIG. 11. FIG. 11 is a sectional view of the airflow generation device 16 of the seventh embodiment. Note that in the seventh embodiment, the same part as that of the configuration of the above-described first embodiment will be denoted by the same reference numeral, and overlapped explanation thereof will be omitted or simplified.

As illustrated in FIG. 11, the airflow generation device 16 of the seventh embodiment includes the first dielectric 20 made of a solid, the first electrode 30 provided on one surface of the first dielectric 20, the second electrode 31 provided, on the other surface of the first dielectric 20, to face the first electrode 30 with the gap provided therebetween in the surface direction (direction in which the airflow F is generated), and a third electrode 93 made of a plurality of partial electrodes 91 and 92 disposed on the rear surface of the second dielectric 40 so that a part thereof is positioned within a range corresponding to that from the end on the second electrode 31 side of the first electrode 30 to the end on the first electrode 30 side of the second electrode 31 on the surface, which is not adhered to the first dielectric, of the second dielectric 40. The partial electrodes 91 and 92 are mutually connected by a metal wiring or the like.

Specifically, the seventh embodiment is an example in which the third electrode 93 has the plurality of partial electrodes 91 and 92 divided in the first direction in which the airflow F flows. Hereinafter, the third electrode 93 will be mainly described.

In the airflow generation device 16, the first electrode 30 and the second electrode 31 are arranged so that proper discharge occurs, in a similar manner to the airflow generation device 10 of the first embodiment. Further, the second dielectric 40 is set to have a thickness which improves the electric field in the vicinity of the first electrode 30 at a time of voltage application.

Further, the respective partial electrodes 91 and 92 forming the third electrode 93 may also be formed, not on the rear surface of the second dielectric 40, but on the front surface on the base 50 side, and the respective electrodes may also be positioned on different planes. Further, the third electrode 93 may also be formed to have a mesh structure.

Note that a material of each of the electrodes forming the third electrode 93 is the same as the material of the first electrode 30 in the airflow generation device 10 of the first embodiment.

Next, an operation of the airflow generation device 16 of the seventh embodiment will be described. When the cable 61 is connected from the power supply 60 to the first electrode 30, the second electrode 31, and the third electrode 93, and voltages are applied so that the second electrode 31 and the third electrode 93 have a certain potential difference with respect to the first electrode 30, discharge occurs in the vicinity of the end on the second electrode 31 side of the first electrode 30. In accordance with the discharge, discharge plasma is generated.

Since the first dielectric 20 is interposed between the first electrode 30 and the second electrode 31, the discharge does not reach arc discharge, resulting in that dielectric barrier discharge which can be stably maintained, occurs. The dielectric barrier discharge is discharge formed along the first dielectric 20. By this discharge, the airflow F which flows from the first electrode 30 side to the second electrode 31 side is generated on one surface of the first dielectric 20.

As described above, according to the airflow generation device 16 of the seventh embodiment, since the partial electrode 91 of the third electrode 93 is provided below the first electrode 30, the electric field intensity in the vicinity of the end on the second electrode 31 side of the first electrode 30 at a time of voltage application is improved, when compared to that in the airflow generation device of the two-electrode configuration. Consequently, the discharge region is widened, and it is possible to realize the stable discharge in which the occurrence of local discharge is prevented, without changing the applied voltages.

### (Eighth embodiment)

Next, an airflow generation device 17 of an eighth embodiment will be described with reference to FIG. 12. FIG. 12 is a sectional view of the airflow generation device 17 of the eighth embodiment. Note that in the eighth embodiment, the same part as that of the configuration of the above-described first embodiment will be denoted by the same reference numeral, and overlapped explanation thereof will be omitted or simplified.

As illustrated in FIG. 12, the airflow generation device 17 of the eighth embodiment includes a dielectric 110 as a dielectric base having a main surface 110a exposed to the outside, the first electrode 30 disposed on the main surface 110a, the second electrode 31 disposed in the dielectric 110 with the interval provided with respect to the first electrode 30 in the first direction in which the airflow F along the main surface is generated, the third electrode 32 disposed at a position in the dielectric 110 between the first electrode 30 and the second electrode 31 in the first direction, and deeper than the second electrode 31, and the power supply 60 applying voltages for causing discharge to the first electrode 30, and the second and third electrodes 31 and 32.

Although the airflow generation device 10 of the first embodiment described above has the configuration in which the first dielectric 20 is arranged between the first electrode 30 and the second electrode 31, the second dielectric 40 is arranged between the second electrode 31 and the third electrode 32, and the base 50 is arranged so as to cover the third electrode 32, in the airflow generation device 17 of the eighth embodiment, the dielectric 110 formed by integrating all of the first dielectric 20, the second dielectric 40, and the base 50, is employed, and the second electrode 31 and the third electrode 32 are buried inside the dielectric 110 in a positional relationship same as that of the first embodiment.

Here, in the airflow generation device 17, the first electrode 30, the second electrode 31, and the third electrode 32 are arranged so that proper discharge occurs.

Note that as the third electrode 32, it is also possible to employ one having any one of the configurations of the second embodiment to the seventh embodiment.

Next, an operation of the airflow generation device 17 of the eighth embodiment will be described. When the cable 61 is connected from the power supply 60 to the first electrode 30, the second electrode 31, and the third electrode 32, and voltages are applied so that the second electrode 31 and the third electrode 32 have a certain potential difference with respect to the first electrode 30, discharge occurs in the vicinity of the end on the second electrode 31 side of the first electrode 30. In accordance with the discharge, discharge plasma is generated.

Since the second electrode 31 is buried inside the dielectric 110, contrary to the first electrode 30, the discharge does not reach arc discharge, resulting in that dielectric barrier discharge which can be stably maintained, occurs.

The dielectric barrier discharge is discharge formed along the dielectric 110. By this discharge, the airflow F which flows from the first electrode 30 side to the second electrode 31 side is generated on the front surface of the dielectric 110.

As described above, according to the airflow generation device 17 of the eighth embodiment, since the third electrode 32 is buried inside the dielectric 110 at the position below the first electrode 30, in a similar manner to the first embodiment, the electric field intensity in the vicinity of the end on the second electrode 31 side of the first electrode 30 at a time of voltage application is improved, when compared to that in the airflow generation device of the two-electrode configuration. Consequently, the discharge region is widened, and it is possible to realize the stable discharge in which the occurrence of local discharge is prevented, without changing the applied voltages.

Note that if the example of the first embodiment (refer to FIG. 1) is considered based on the dielectric 110 as in the eighth embodiment, it can be said that in the example, the dielectric 110 has the first dielectric 20 disposed between the first electrode 30 and the second electrode 31, the second dielectric 40 disposed between the second electrode 31 and the third electrode 32, and the base 50 disposed at a position deeper than the third electrode 32.

According to at least one embodiment described above, it is possible to provide an airflow generation device suitable for being used under outdoor environment by securing electric insulation performance between electrodes and preventing local discharge to improve durability of the electrode.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. An airflow generation device, comprising:
a dielectric base (110) having a main surface;
a first electrode (30) disposed on the main surface;
a second electrode (31) disposed in the dielectric base (110) with an interval from the first electrode (30) in a first direction along the main surface;
a third electrode (32) having at least a part disposed at a position in the dielectric base (110), the position being between the first electrode (30) and the second electrode (31) in the first direction and deeper than the second electrode (31); and
a power supply (60) to apply voltages for causing discharge to the first, second, and third electrodes (30, 31, 32).

2. The airflow generation device according to claim 1,
wherein the dielectric base (110) comprises:
a first dielectric (20) disposed between the first electrode (30) and the second electrode (31);
a second dielectric (40) disposed between the second electrode (31) and the third electrode (32); and
a third dielectric (50) disposed at a position deeper than the third electrode (32).

3. The airflow generation device according to claim 1 or 2,
wherein the third electrode (32) comprises:
a first portion (70a) on the first electrode (30) side; and
a second portion (70b) on the second electrode (31) side disposed at a position shallower than the first portion (70a).

4. The airflow generation device according to claim 1 or 2,
wherein the third electrode (32) has a portion whose depth continuously decreases from the first electrode (30) side to the second electrode (31) side.

5. The airflow generation device according to claim 1 or 2,
wherein the third electrode (93) comprises a plurality of partial electrodes (91, 92) divided in the first direction.

6. The airflow generation device according to claim 1 or 2,
wherein the part of the third electrode (80a) overlaps with the first electrode (30) in the first direction.

7. The airflow generation device according to claim 1 or 2,
wherein the part of the third electrode (80b) overlaps with the second electrode (31) in the first direction.

8. The airflow generation device according to claim 1 or 2,
wherein the third electrode (90) does not overlap with any of the first and second electrodes (30, 31) in the first direction.

9. The airflow generation device according to claim 1 or 2,
wherein the part is a first end of the third electrode (32) matching an end of the first electrode (30) in the first direction.

10. The airflow generation device according to claim 1 or 2,
wherein the part is a second end of the third electrode (32) matching an end of the second electrode (31) in the first direction.

11. The airflow generation device according to claim 1 or 2,
wherein the third electrode (32) comprises:
a first end matching an end of the first electrode (30) in the first direction; and
a second end matching an end of the second electrode (31) in the first direction.
